# EUROPÄISCHE PATENTSCHRIFT

(11) **EP 1 589 244 B1**
(45) Veröffentlichungstag und Bekanntmachung des Hinweises auf die Patenterteilung: **03.10.2007**
(21) Anmeldenummer: 04009398.1
(22) Anmeldetag: 21.04.2004
(51) Int. Cl.: F16D 13/64, F16D 13/62

(54) **Mitnehmereinheit mit axial vorgespannter Mitnehmerscheibe**
Driving unit with axially preloaded driving disc
Dispositif d'entraînement avec plateau d'entraînement préchargé axiallement

(43) Veröffentlichungstag der Anmeldung: 26.10.2005
(73) Patentinhaber: BorgWarner Inc., Auburn Hills, MI 48326 (US)
(72) Erfinder: Gerathewohl, Rainer, 76149 Karlsruhe (DE)
(74) Vertreter: Patentanwälte Westphal, Mussgnug & Partner

(56) Entgegenhaltungen:
- EP-A- 1 371 867
- DE-A- 2 125 870
- US-A- 6 044 948

## Beschreibung

Die Erfindung betrifft eine Mitnehmereinheit, zur Verwendung in Kraftübertragungsaggregaten, insbesondere in Lamellenkupplungen oder Reibbremsen, bestehend aus einer Mitnehmerscheibe und einem Lamellenträger, wobei die Mitnehmerscheibe formschlüssig zur Kraftübertragung mit dem Lamellenträger verbunden ist.

Eine Mitnehmereinheit der gattungsgemäßen Art ist beispielsweise aus der EP 1 382 872 A1 bekannt. Eine solche Mitnehmereinheit findet insbesondere, aber nicht ausschließlich, zur Antriebs- oder Abtriebsanbindung von Lamellenkupplungssystemen in Doppelkupplungen Verwendung.

Eine weitere Mitnehmereinheit mit einem Federring zur axialen Fixierung der Mitnehmerscheibe ist aus der DE 2 125 870 bekannt.

Die aus dem Stand der Technik bekannten Mitnehmereinheiten bestehen im Wesentlichen aus einer Mitnehmerscheibe und einem Lamellenträger. In der EP 1 382 872 A1 ist eine formschlüssige Kombination aus Mitnehmerscheibe und Außenlamellenträger gezeigt. Es ist jedoch auch denkbar, dass ein Innenlamellenträger formschlüssig, antriebs- oder abtriebsseitig mittels einer Mitnehmerscheibe angebunden ist. Zur Herstellung einer formschlüssigen Verbindung zwischen Mitnehmerscheibe und Lamellenträger ist es aus dem Stand der Technik bekannt, die Mitnehmerscheibe mit einer in Umfangsrichtung verlaufenden Außenverzahnung zu versehen. Am Lamellenträger ist eine zur Außenverzahnung der Mitnehmerscheibe zumindest abschnittsweise form- und funktionskomplementäre Innenverzahnung vorgesehen. Zur Montage der Mitnehmereinheit wird die Mitnehmerscheibe mit der Außenverzahnung in die Innenverzahnung des Lamellenträgers eingesetzt.

Die formschlüssige Verbindung zwischen Mitnehmerscheibe und Lamellenträger ist üblicherweise aus Montagegründen und wegen einer wirtschaftlichen Herstellung spielbehaftet. Hierdurch kommt es zu erhöhten Verschleißerscheinungen, insbesondere durch Einhämmern der Verbindung von Mitnehmerscheibe und Lamellenträger. Weiterhin nachteilig ist eine Leerlauf-Geräuschentwicklung durch die spielbehaftete formschlüssige Verbindung.

Die Nachteile könnten durch eine spielfreie Verbindung zwischen Mitnehmerscheibe und Außenlamellenträger beseitigt werden. Eine Spielfreiheit kann jedoch nicht in jedem Fall gewährleistet werden, da durch Verschleißerscheinungen, ungünstige Toleranzlagen, etc. im Betrieb dennoch ein Spiel in der formschlüssigen Verbindung auftreten kann. Insbesondere durch den Einbau von Kupplung mit Mitnehmerscheibe zwischen Getriebe und Motor im Antriebsstrang eines Fahrzeugs kann durch radiale Fluchtungsfehler zwischen Getriebeeinganswelle und Kurbelwelle des Verbrennungsmotors ein Biegemoment (Umlaufbiegung) über die Mitnehmerscheibe auf die Kupplung geleitet werden. Dies hat zur Folge, dass sich die Mitnehmerscheibe relativ zum Außenlamellenträger in axialer Richtung, innerhalb der formschlüssigen Verbindung, bewegen möchte.

Ausgehend von dem genannten Stand der Technik besteht die Aufgabe der vorliegenden Erfindung darin, eine Mitnehmereinheit vorzuschlagen, bei der negative Einflüsse aufgrund einer spielbehafteten, formschlüssigen Verbindung zwischen Mitnehmerscheibe und Lamellenträger aufwandsgünstig weitestgehend vermieden werden.

Diese Aufgabe wird gelöst durch eine Mitnehmereinheit mit den Merkmalen des Anspruchs 1. Durch die erfindungsgemäße Ausgestaltung der Mitnehmereinheit wird eine axiale Bewegung der Mitnehmerscheibe innerhalb der nun teilweisen kraftschlüssigen Verbindung zum Lamellenträger vermieden. Insbesondere wird zusätzlich, im Bereich kleiner Drehmomente, durch die axiale Vorspannung eine Bewegung in Umfangsrichtung innerhalb eines eventuell vorhandenen Spiels verhindert, weil auch hier aufgrund von Reibungskräften für kleinere Drehmomente eine kraftschlüssige Verbindung vorliegt. Somit kann eine Geräuschentwicklung im Leerlauf unterbunden werden.

Das Mittel zur axialen Vorspannung der Mitnehmerscheibe gegen den Lamellenträger ist dabei so auszulegen, dass die resultierende Vorspannkraft so groß ist, dass die Axialkraft aufgrund des maximalen Umlaufbiegemoments immer kleiner bleibt als diese Vorspannkraft. Nur hierdurch kann ein "Abheben" der Mitnehmerscheibe und somit auch eine Relativbewegung in axialer Richtung vermieden werden. Weiterhin sollte die mit der Vorspannkraft erzeugte Haftreibung in Umfangsrichtung groß genug sein, um insbesondere bei kleinen Drehmomenten im Leerlauf eine Bewegung der Mitnehmerscheibe in Umfangsrichtung zu verhindern. Hierdurch werden Geräusche, wie ein Leerlaufrasseln, sicher verhindert. Weiterhin wird ein Verschleiß an der Verbindungsstelle ebenfalls verhindert.

Eine optimale kraft-/formschlüssige Verbindung zwischen Mitnehmerscheibe und Lamellenträger wird dadurch gewährleistet, dass die Mitnehmerscheibe mit einer Außenverzahnung versehen ist, und der Lamellenträger mit einer zur Außenverzahnung der Mitnehmerscheibe zumindest abschnittsweise formkomplementären Innenverzahnung versehen ist. Dabei ist es sinnvoll, aber nicht notwendig, dass sich in eingesetztem Zustand die Innenverzahnung und die Außenverzahnung zumindest abschnittsweise hintergreifen.

In Ausgestaltung der Erfindung ist mit Vorteil vorgesehen, dass mindestens eine federnde Lasche vorgesehen ist, die sich einerseits an der Mitnehmerscheibe und andererseits, insbesondere über einen in einer Sicherungsringnut im Lamellenträger vorgesehenen Sicherungsring, am Lamellenträger abstützt. Durch das Vorsehen der federnden Laschen wird die dynamische Belastung auf die im Lamellenträger eingebrachte Sicherungsringnut zumindest vermindert.

Um eine gleichmäßige axiale Vorspannung der Mitnehmerscheibe zu gewährleisten, sind über den Umfang der Mitnehmerscheibe verteilte federnde Laschen, beispielsweise als Biegefedern, vorgesehen. Der Zusammenbau eines Kraftübertragungsaggregats kann wesentlich erleichtert werden, wenn die federnden Laschen unlösbar mit der Mitnehmerscheibe verbunden sind. Es ist besonders zweckmäßig, wenn die federnden Laschen einstückig mit der Mitnehmerscheibe ausgebildet sind. Da die Mitnehmerscheibe üblicherweise als Blechumformteil ausgebildet ist, bietet es sich an, federnde Laschen an der Mitnehmerscheibe auszubilden, wobei sich die Laschen mit ihrem freien Ende am Lamellenträger oder einem mit dem Lamellenträger verbundenen Bauteil abstützen.
Selbstverständlich ist es auch denkbar, die Federelemente einstückig mit dem Lamellenträger auszubilden.

Im Folgenden wird die Erfindung anhand von Zeichnungen, die verschiedene Ausführungsbeispiele darstellen, näher erläutert.
Es zeigen:
- Fig. 1: eine perspektivische Darstellung einer Mitnehmerscheibe und eines Außenlamellenträgers in unmontiertem Zustand,
- Fig. 2: einen Ausschnitt einer Mitnehmereinheit,
- Fig. 3: eine schematische Darstellung eines Ausschnitts einer nicht erfindungsgemäßen Mitnehmereinheit mit gewelltem Sicherungsring,
- Fig. 4: eine schematische Darstellung eines Ausschnitts einer nicht erfindungsgemäßen Mitnehmereinheit mit Tellerfeder und
- Fig. 5: eine schematische Darstellung eines Ausschnitts einer Mitnehmereinheit mit einstückig mit der Mitnehmerscheibe ausgebildeten, federnden Laschen.

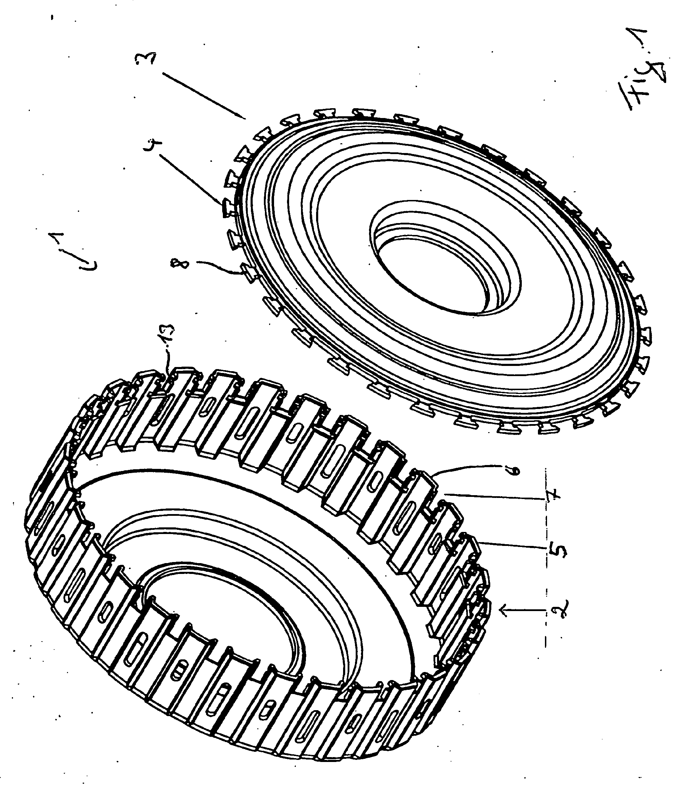

Die Figur 1 zeigt in perspektivischer und unvollständiger Darstellung eine Mitnehmereinheit 1. Insbesondere zeigt Fig. 1 keine Mittel zur axialen Vorspannung der Mitnehmerscheibe 3. Gezeigt sind lediglich eine Mitnehmerscheibe 3 sowie beispielhaft ein Außenlamellenträger 2. Die Mitnehmerscheibe 3 ist mit einer umlaufenden Außenverzahnung 4 ausgestattet. Der Außenlamellenträger 2 weist eine Innenverzahnung 5 auf. Im vorliegenden Ausführungsbeispiel weist der Außenlamellenträger 2 im Bereich jedes Zahns 6 eine schlitzartige Ausnehmung 7 auf, wobei jede schlitzartige Ausnehmung im montierten Zustand jeweils von einem Zahn 8 der Außenverzahnung 4 durchgriffen wird. Durch die spezielle Ausgestaltung der Zähne 8 und der schlitzartigen Ausnehmungen 7 wird eine Hintergreifung von Außenverzahnung 4 und Innenverzahnung 5 erreicht. An dieser Stelle sei darauf hingewiesen, dass die dargestellte Ausbildung der formschlüssigen Verbindung zwischen Mitnehmerscheibe und Lamellenträger nur beispielhaft dargestellt ist. Die Erfindung kann mit auch mit anders ausgebildeten formschlüssigen Verbindungen realisiert werden. Es reicht beispielsweise eine Außenverzahnung am Umfang der Mitnehmerscheibe 3 aus, welche in Ausnehmungen des Lamellenträgers aufgenommen wird. Ein spezieller Hintergriff, oder beispielsweise das Vorsehen einer Innenverzahnung am Lamellenträger sind nicht zwingend notwendig.

Aus Übersichtlichkeitsgründen wurden die in dem Lamellenträger in bekannter Weise vorgesehenen, axial verschieblichen Reiblamellen in keinem Ausführungsbeispiel dargestellt.

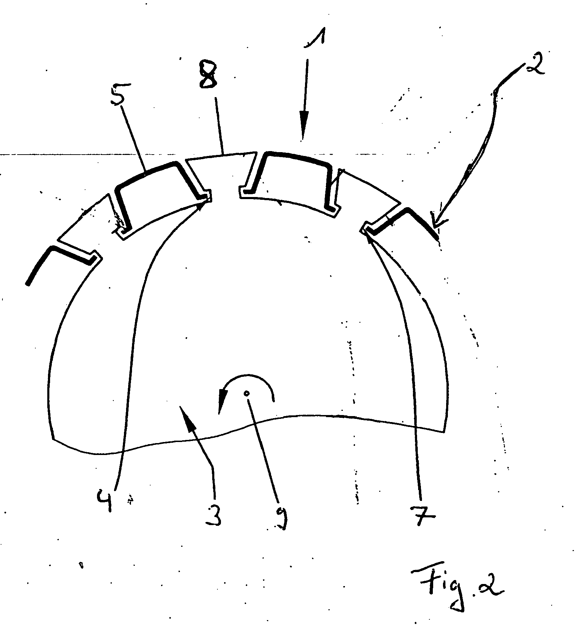

In Fig. 2 ist eine Mitnehmereinheit im montierten Zustand angedeutet, wobei auch hier keine Mittel zur axialen Vorspannung der Mitnehmerscheibe 3 eingezeichnet sind. Es wird deutlich, dass die Mitnehmerscheibe 3 und der Lamellenträger 2 im montierten Zustand eine gemeinsame Drehachse 9 aufweisen. In dem gezeigten Ausführungsbeispiel wird die formschlüssige Verbindung zwischen Mitnehmerscheibe 3 und Außenlamellenträger 2 durch eine Außenverzahnung 4 an der Mitnehmerscheibe 3 sowie einer Innenverzahnung 5 am Lamellenträger 2 gebildet, wobei die Zähne 8 der Außenverzahnung 4 in schlitzartige Ausnehmungen 7 des Lamellenträgers 2 eingreifen. Besonders bei der dargestellten formschlüssigen Verbindung ist, dass sich Außenverzahnung 4 und Innenverzahnung 5 hintergreifen. Wie bereits erwähnt, ist die gewellte kraftschlüssige Verbindung nur beispielhaft zu verstehen. In einer wesentlich einfacheren Ausgestaltungsform ist gar keine Innenverzahnung vorgesehen und die Außenverzahnung 4 ist in Ausnehmungen im Lamellenträger 2 aufgenommen.

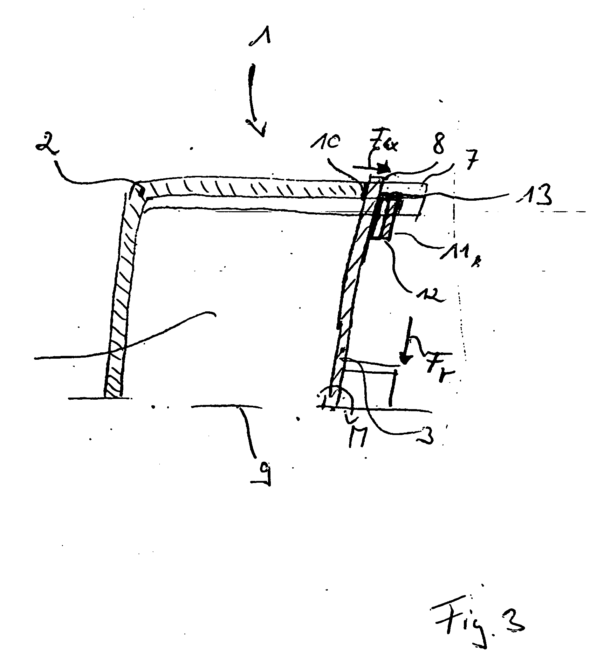

Fig. 3 zeigt in schematischer Darstellung eine Mitnehmereinheit 1, bestehend aus einem Lamellenträger 2 mit nicht dargestellten Außenlamellen, sowie einer antriebsseitigen Mitnehmerscheibe 3. Die Mitnehmerscheibe 3 ist umfangsseitig kraftschlüssig mit dem Außenlamellenträger 2 verbunden. Dabei greifen Zähne 8 der Mitnehmerscheibe 3 in schlitzartige Ausnehmungen 7 im Lamellenträger 2. Die Mitnehmerscheibe stützt sich in axialer Richtung am Ende 10 der schlitzartigen Ausnehmung 7 am Lamellenträger 2 ab. Auf der gegenüberliegenden Seite ist als Mittel 11 zur axialen Vorspannung ein gewellter Sicherungsring 12 vorgesehen. Der gewellte Sicherungsring 12 ist umlaufend ausgebildet und stützt sich wiederum am Lamellenträger 2 in einer Sicherungsringnut 13 ab. Die Sicherungsringnut 13 ist in den Lamellenträger 2 umlaufend eingebracht. In Fig. 1 ist eine Sicherungsringnut 13 zur Aufnahme eines herkömmlichen Sicherungsrings 15 dargestellt.

Aus einer Radialkraft F_{R} resultiert ein Biegemoment M. Die Radialkraft F_{R} ist beispielsweise auf einen nicht exakt fluchtenden Einbau des Kraftübertragungsaggregats im Antriebsstrang zurückzuführen. Aus dem Biegemoment M resultiert eine Axialkraft Fₐ, aufgrund derer sich die Mitnehmerscheibe 3 in axialer Richtung bewegen möchte. Mit Hilfe der Mittel 11 zur axialen Vorspannung wird die Axialkraft Fₐ kompensiert. Bei dem in Fig. 3 dargestellten Beispiel erfolgt auch der axiale Toleranzausgleich mittels eines gewellten Sicherungsringes 12. Dabei ist der gewellte Sicherungsring 12 so auszulegen, dass die Axialkraft Fa aufgrund des Biegemoments M immer kleiner ist als die Vorspannkraft. Nur so wird ein "Abheben" der Mitnehmerscheibe 3 verhindert. Außerdem muss die mit der Vorspannkraft erzeugte Reibkraft in Umfangsrichtung groß genug sein, um bei zumindest kleinen Drehmomenten eine Bewegung der Mitnehmerscheibe in Umlaufrichtung zu verhindern. Montageseitig bzw. logistisch resultiert aus der Wahl eines gewellten Sicherungsrings 12 als Mittel 11 zur axialen Vorspannung ein erheblicher Vorteil, da die bisher notwendigen dickenmäßig gestuften Sperrringe durch einen einzigen, gewellten Ring ersetzt werden können. Je nach Toleranzlage waren bis zu 11 verschiedene Dickenstufungen notwendig. Dieser Toleranzausgleich wird nun von einem einzigen, gewellten Ring innerhalb des Federweges übernommen.

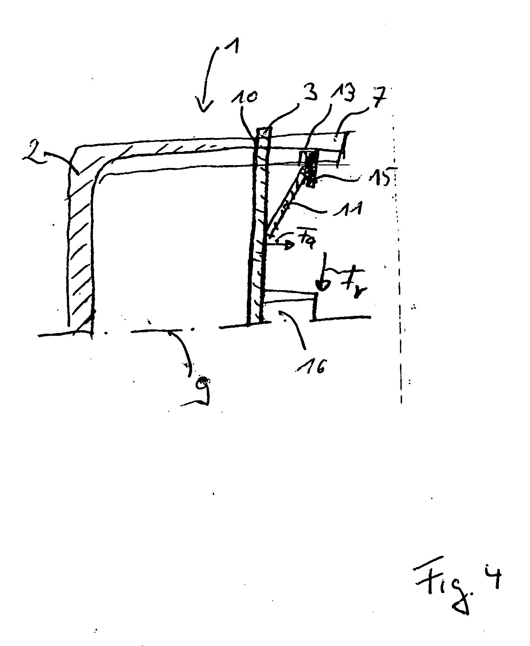

Bei der in Fig. 4 dargestellten Mitnehmereinheit 1, bestehend aus Lamellenträger 2 und Mitnehmerscheibe 3 ist als Mittel 11 zur axialen Vorspannung der Mitnehmerscheibe 3 gegen den Lamellenträger 2 mindestens eine Tellerfeder 14 vorgesehen. Die Tellerfeder 14 stützt sich auf der linken Seite gegen die Mitnehmerscheibe 3 ab. Mit ihrer rechten Seite stützt sich die Tellerfeder 14 am Lamellenträger 2 über einen Sicherungsring 15 ab. Der Sicherungsring 15 wird in einer Sicherungsringnut 13 im Lamellenträger 2 gehalten. In dem gezeigten Fall ist die Mitnehmerscheibe 3 antriebsseitig montiert. Die Antriebskraft wird über eine Nabe 16 in die Mitnehmerscheibe 3 eingeleitet und über die formschlüssige Verbindung in den Lamellenträger 2 übertragen. Nabe 16, Mitnehmerscheibe3 und Lamellenträger 2 haben eine gemeinsame Drehachse 9.

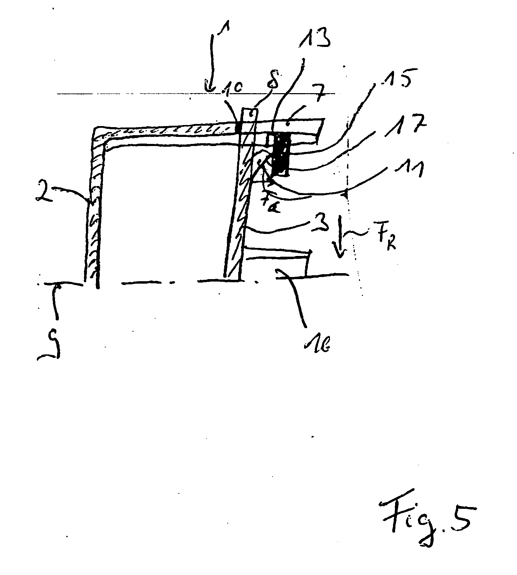

In Fig. 5 ist ein Ausführungsbeispiel einer erfindungsgemäßen Mitnehmereinheit 1 bestehend aus Lamellenträger 2 und Mitnehmerscheibe 3 dargestellt. Bei diesem Ausführungsbeispiel sind die Mittel 11 zur axialen Vorspannung der Mitnehmerscheibe 3 gegen den Lamellenträger 2 als federnde Laschen 17 ausgebildet. Mit ihrem freien Ende stützen sich die Laschen 17 an einem Sicherungsring 15 in einer Sicherungsringnut 13 am Lamellenträger ab. Über den Umfang der Mitnehmerscheibe 3 sind eine Vielzahl von Laschen 17 verteilt angeordnet. Durch die einstückige Bauweise ergeben sich insbesondere Vorteile bei dem Zusammenbau. Auch führt die einstückige Ausbildung zu einer erheblichen Material- und Herstellungskostenersparnis.

## Patentansprüche

1. Mitnehmereinheit, zur Verwendung in Kraftübertragungsaggregaten, insbesondere in Lamellenkupplungen oder Reibbremsen, bestehend aus einer Mitnehmerscheibe und einem Lamellenträger, wobei die Mitnehmerscheibe formschlüssig mit dem Lamellenträger verbunden ist,
**dadurch gekennzeichnet, dass** als Mittel (17) zur axialen Vorspannung der Mitnehmerscheibe (3) gegen den Lamellenträger (2) federnde Laschen (17) vorgesehen sind, welche einstückig mit der Mitnehmerscheibe (3) ausgebildet sind.

2. Mitnehmereinheit nach Anspruch 1,
**dadurch gekennzeichnet, dass** die Mitnehmerscheibe (3) mit einer Außenverzahnung (4) versehen ist, und der Lamellenträger (2) mit einer zur Außenverzahnung (4) der Mitnehmerscheibe (3) zumindest abschnittsweise formkomplementären Innenverzahnung (5) versehen ist, und wobei die Mitnehmerscheibe (3) in den Lamellenträger (2) einsetzbar ist.

3. Mitnehmereinheit nach einem der vorhergehenden Ansprüche,
**dadurch gekennzeichnet, dass** mindestens eine federnde Lasche (17) vorgesehen ist, die sich einerseits an der Mitnehmerscheibe (3) und andererseits, insbesondere über einen in einer Sicherungsringnut (13) im Lamellenträger (2) vorgesehenen Sicherungsring (15), am Lamellenträger (2) abstützt.

4. Mitnehmereinheit nach Anspruch 3,
**dadurch gekennzeichnet, dass** mehrere, über den Umfang der Mitnehmerscheibe (3) verteilte federnde Laschen (17) vorgesehen sind.

## Claims

1. Driver unit, for use in power transmission units, in particular in multiplate clutches or friction brakes, comprising a driver disc and a plate carrier, the driver disc being positively connected to the plate carrier, **characterized in that** as means (17) for the axial pretensioning of the driver disc (3) against the plate carrier (2) resilient shackles (17) are provided, which are configured in one piece with the driver disc (3).

2. Driver unit according to Claim 1, **characterized in that** the driver disc (3) is provided with an external toothing (4) and the plate carrier (2) is provided with an internal toothing (5) which, at least portionally, is complementary in shape to the external toothing (4) of the driver disc (3), the driver disc (3) being insertable into the plate carrier (2).

3. Driver unit according to one of the preceding claims, **characterized in that** at least one resilient shackle (17) is provided, which is supported, on the one hand, against the driver disc (3) and, on the other hand, in particular via a locking ring. (15) provided in a locking ring groove (13) in the plate carrier (2), against the plate carrier (2).

4. Driver unit according to Claim 3, **characterized in that** a plurality of resilient shackles (17) distributed over the periphery of the driver disc (3) are provided.

## Revendications

1. Dispositif d'entraînement, à utiliser dans des ensembles de transmission de force, en particulier dans des accouplements à lamelles ou des freins à friction, se composant d'un plateau d'entraînement et d'un support de lamelles, dans lequel le plateau d'entraînement est assemblé en complémentarité de forme avec le support de lamelles, **caractérisé en ce que** l'on prévoit, comme moyens (17) pour précharger axialement le plateau d'entraînement (3) contre le support de lamelles (2), des lames élastiques (17) qui sont formées d'un seul tenant avec le plateau d'entraînement (3).

2. Dispositif d'entraînement selon la revendication 1, **caractérisé en ce que** le plateau d'entraînement (3) est pourvu d'une denture extérieure (4), et le support de lamelles (2) est pourvu d'une denture intérieure (5) de forme complémentaire au moins localement à la denture extérieure (4) du plateau d'entraînement (3), et dans lequel le plateau d'entraînement (3) peut être introduit dans le support de lamelles (2).

3. Dispositif d'entraînement selon l'une quelconque des revendications précédentes, **caractérisé en ce qu'**il est prévu au moins une lame élastique (17), qui s'appuie d'une part sur le plateau d'entraînement (3) et d'autre part sur le support de lamelles (2), en particulier au moyen d'une bague de fixation (15) prévue dans une rainure de bague de fixation (13) dans le support de lamelles (2).

4. Dispositif d'entraînement selon la revendication 3, **caractérisé en ce qu'**il est prévu plusieurs lames élastiques (17) réparties sur la périphérie du plateau d'entraînement (3).
